# EUROPEAN PATENT SPECIFICATION

(11) **EP 4 102 065 B1**
(45) Date of publication and mention of the grant of the patent: **17.09.2025**
(21) Application number: 22176193.5
(22) Date of filing: 30.05.2022
(51) Int. Cl.: F03D 15/00, F03D 80/50, F03D 1/06

(54) **HUB-SHAFT BOLTED-JOINT CONNECTION OF A WIND TURBINE**
NABE-WELLE-BOLZENVERBINDUNG EINER WINDTURBINE
RACCORD DE BOULON À L'ARBRE DU MOYEU D'UNE ÉOLIENNE

(30) Priority: 09.06.2021 US 202117342643
(43) Date of publication of application: 14.12.2022
(73) Proprietor: General Electric Renovables España, S.L., 08005 Barcelona (ES)
(72) Inventor: Leonard, Jay F., Greenville, SC, 29615 (US); Misavage, Brian Thomas, Schenectady, NY, 12309 (US); Johnson, Michael Royce, Schenectady, NY, 12345 (US); Davidson, Paul Howard, Schenectady, NY, 12309 (US); Thomas, Gregory Clarence, Langhorne, PA, 19053 (US)
(74) Representative: Zimmermann & Partner Patentanwälte mbB

(56) References cited:
- EP-A1- 3 795 822
- WO-A1-2020/088723
- DK-B1- 178 152
- KR-B1- 101 571 304
- US-A1- 2010 028 153
- US-A1- 2013 186 104

## Description

### FIELD

The present disclosure relates generally to wind turbines, and more particularly to a structural assembly for an improved hub-to-shaft connection.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

The uptower components of the wind turbines require periodic maintenance, inspection, and repair, and the safety of personnel conducting such procedures is paramount. The rotating components of the rotor, drivetrain, and yaw system all present risks to personnel, and it is an important safety consideration to prevent the rotation of such components while personnel are performing certain procedures in the nacelle or rotor hub. In various jurisdictions around the world, permits for installation and operation of wind turbines require interlocks between the rotor and yaw systems with the hatches in the nacelle that give access to the respective components/systems.

In this regard, EP 1 291 521 A1 describes a wind turbine having a rotor lock device for locking a rotor disk and fixation means for fixing the rotor disk to the nacelle. The rotor lock device includes an axially movable pin arranged on the nacelle structure and corresponding apertures formed in the rotor disk. Patent application WO2020/088723 A1 describes a wind turbine including a first connecting structure associated with the main shaft fixed to a second connecting structure of a rotor hub. A rotor locking disc is carried on the main shaft. The rotor locking disc has a peripheral region and a plurality of rotor locking elements in the peripheral region for receiving one or more rotor locking pins. The first connecting structure includes first and second sets of fastener holes. The first set of fastener holes is located at a position radially inward of the rotor locking elements and the second set of fastener holes is located between adjacent rotor locking elements. The first and/or second set of fastener holes are used to receive fasteners to secure the main shaft to the rotor hub. Patent application EP 3 795 822 A1 refers to a rotor hub supporting tool for a main shaft assembly and a rotor hub of a wind driven power plant including a carrier element for mounting the supporting tool to the main shaft assembly and a coupling element for mounting the supporting tool to the rotor hub. The supporting tool further includes a fastening element for coupling the coupling element to the carrier element. The supporting tool is configured such that the distance of the coupling element to the carrier element in a radial direction of the rotational axis of the main shaft assembly can be adjusted by the fastening element. The rotor hub supporting tool is further configured such that an axial movement of coupling element relative to the carrier element in an axial direction of the rotational axis remains feasible when the coupling element is coupled to the carrier element by the fastening element. Korean patent KR 101 371304 B1 aims to provide a wind power generator including a holding supporter. The wind power generator includes a hub connected to multiple blades; a main shaft combined with the hub and rotated by the hub; a bearing housing for surrounding the top of the main shaft and including a bearing for supporting the main shaft; a main frame for surrounding the bottom of the main shaft, which is combined with the bearing housing; a rotor lock disc installed on the hub and rotated with the hub, which includes multiple rotor lock holes; a first fixed unit combined with the rotor lock disc; and, a second fixed unit combined with the main frame. Patent Application US 2010/028153 A1 relates to a method for installing a rotor hub on a rotor shaft of a wind energy plant, in which the following steps are performed: at the end of the rotor shaft facing the rotor hub, a locking disk is attached on the rotor shaft, which has a multiplicity of bores for the preliminary attachment of the rotor hub, for installing it, the rotor hub is made to sit close to the locking disk, if required, the bores in the locking disk are made to overlap with corresponding bores in the rotor hub by rotating the rotor shaft and/or the rotor hub, starting from the rotor shaft side, the rotor hub is preliminarily screwed together with the locking disk through the bores of the locking disk and of the rotor hub, and starting from the interior space of the rotor hub, the rotor hub is definitely screwed together with the locking disk and the rotor shaft.

Furthermore, U.S. Patent Publication No. 2010/0232978 describes a rotor lock for locking a hub of a wind turbine against rotational movements relative to a base frame of the nacelle of the wind turbine. Such a locking arrangement is, e.g., required for safety purposes in order to prevent the hub from rotating during maintenance of the wind turbine. The locking arrangement may include a safety system that prevents access to an interior part of the hub when certain components of the locking arrangement are in the release position. The safety system may, e.g., be coupled to a locking system of a hatch or a door arranged across an opening creating access to the hub, wherein the safety system prevents the locking mechanism from being unlocked if the locking components are in the release position, i.e., if the hub is allowed to rotate relative to the base frame. Thereby, it is ensured that maintenance personnel can only gain access to the interior part of the hub if the hub is securely locked to the base frame.

In a typical wind turbine, the load transfer path from the hub to the main shaft goes completely through a bolted joint between these two components. However, the rotor lock disk, which is typically in the vicinity of the bolted connection, is not involved in this load path. Rather, the sole purpose of the rotor lock disk is to receive the Low Speed Rotor Lock (LSRL) shear pin to lock the turbine rotor.

Accordingly, there is a need for an improved structural architecture that engages the rotor lock disk in the load carrying capacity to increase the hub to main shaft joint capacity.

### BRIEF DESCRIPTION

Aspects and advantages of the present disclosure will be set forth in part in the following description, or may be obvious from the description, or may be learned through practice of the present disclosure.

In one aspect, the present disclosure is directed to a wind turbine. The wind turbine includes a nacelle, a generator housed with the nacelle, a rotor having a rotatable hub with at least one rotor blade mounted thereto, at least one shaft rotatably coupled to the hub for driving the generator, and a rotor lock arranged with the shaft(s) for locking the shaft(s) in a locked position. The wind turbine also includes a bolted-joint connection at an interface between the hub and the shaft(s). The bolted-joint connection includes a first plurality of fasteners extending through the hub, the shaft(s), and the rotor lock. As such, a load transfer path from the hub to the shaft(s) travels through each of the hub, the shaft(s), and the rotor lock so as to increase a load capacity of the interface. The interface further includes a hub stiffener.

In an embodiment, the wind turbine may also include a gearbox. In such embodiments, the shaft(s) may include a rotor shaft rotatably coupled to the hub for driving the gearbox and a generator shaft rotatably coupled to the gearbox for driving the generator. In another embodiment, the rotor lock may be one of a rotor shaft rotor lock or a generator shaft rotor lock.

In one embodiment, the hub stiffener may be positioned on a rotor side of the rotor lock. In alternative embodiments, the hub stiffener may be positioned on a generator side of the rotor lock. In certain embodiments, the hub stiffener may include a plurality of stiffener segments arranged circumferentially around the rotor lock.

Thus, in particular embodiments, each of the plurality of stiffener segments receives one or more of the first plurality of fasteners therethrough. Furthermore, in such embodiments, each of the plurality of stiffener segments may be positioned within the hub.

In further embodiments, each of the plurality of stiffener segments receives a subset of a second plurality of fasteners therethrough such that the second plurality of fasteners secure the plurality of stiffener segments to the hub between the rotor lock and the hub. In such embodiments, the second plurality of fasteners may be arranged concentric with the first plurality of fasteners.

Furthermore, in an embodiment, one or more of the subset of the second plurality of fasteners received through each of the plurality of stiffener segments may include jacking components, such as jacking fasteners and/or jacking wedges. In such embodiments, the jacking components may be positioned at opposing ends of the each of the plurality of stiffener segments.

In additional embodiments, one or more of the plurality of stiffener segments may include a scalloped portion for reducing weight thereof and/or to enable packaging of the features and/or components required in the assembly process.

In another aspect, the present disclosure is directed to a method of increasing a load capacity of an interface between a hub and a rotor shaft of a wind turbine. The method includes providing a first plurality of fasteners through the hub, the rotor shaft, and a rotor lock of the wind turbine. The rotor lock includes a first plurality of through holes. The method further includes machining a second plurality of through holes through the rotor lock and through the hub. Further, the method includes arranging a plurality of stiffener segments circumferentially between the rotor lock and the hub to form a hub stiffener, each of the plurality of stiffener segments comprising a plurality of through holes that align with a subset of the second plurality of through holes. Moreover, the method includes securing the hub stiffener between the rotor lock and the hub via a plurality of second fasteners that extend through the plurality of through holes of each of the stiffener segments and the second plurality of through holes of the rotor lock.

In an embodiment, the method includes removing a shroud of the rotor lock before machining the second plurality of through holes through the rotor lock.

In further embodiments, the method may include adjusting a height of the hub stiffener via one or more jacking components arranged with one or more of the plurality of stiffener segments to match a gap between the hub and the rotor lock.

In another embodiment, the method may include installing a segmented rain cover at the interface.

In additional embodiments, the method may include machining the second plurality of through holes through the rotor lock from outside of the hub. Alternatively, the method may include machining the second plurality of through holes through the rotor lock from within the hub.

These and other features, aspects and advantages of the present disclosure will become better understood with reference to the following description and appended claims. The accompanying drawings, which are incorporated in and constitute a part of this specification, illustrate embodiments of the present disclosure and, together with the description, serve to explain the principles of the present disclosure.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates an enlarged, internal view of a portion of the wind turbine of FIG. 1;
FIG. 3 illustrates a simplified, schematic view of a portion of the drivetrain components of the wind turbine according to the present disclosure;
FIG. 4 illustrates a detailed, perspective view of one embodiment of a bolted-joint connection between the hub and the rotor shaft according to the present disclosure;
FIG. 5 illustrates a perspective, cross-sectional view of still another embodiment of a bolted-joint connection between the hub and the rotor shaft according to the present disclosure, particularly illustrating a hub stiffener at the bolted-joint connection;
FIG. 6 illustrates a partial, perspective view of the hub stiffener for the bolted-joint connection of FIG. 5;
FIG. 7 illustrates a perspective, cross-sectional view of yet another embodiment of a bolted-joint connection between the hub and the rotor shaft according to the present disclosure, particularly illustrating a hub stiffener at the bolted-joint connection;
FIG. 8 illustrates a partial, perspective view of the hub stiffener for the bolted-joint connection of FIG. 7;
FIG. 9 illustrates a perspective view of one embodiment of a stiffener segment of a hub stiffener for a bolted-joint connection according to the present disclosure;
FIG. 10 illustrates a cross-sectional view of a portion of the stiffener segment of the hub stiffener of FIG. 9;
FIG. 11 illustrates a perspective view of one embodiment of a hub stiffener for a bolted-joint connection according to the present disclosure;
FIG. 12 illustrates a partial, perspective view of the hub stiffener of FIG. 11;
FIG. 13 illustrates an exploded view of the hub stiffener of FIG. 11;
FIG. 14 illustrates a partial, perspective view of one embodiment of a hub stiffener for a bolted-joint connection according to the present disclosure, particularly illustrating a rain cover arranged with the hub stiffener;
FIG. 15 illustrates an exploded view of hub stiffener of FIG. 14;
FIG. 16 illustrates a partial, perspective view of a further embodiment of a bolted-joint connection between the hub and the rotor shaft according to the present disclosure, particularly illustrating the bolted-joint connection from within the hub;
FIG. 17 illustrates a flow diagram of one embodiment of a method of increasing a load capacity of an interface between a hub and a rotor shaft of a wind turbine according to the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims.

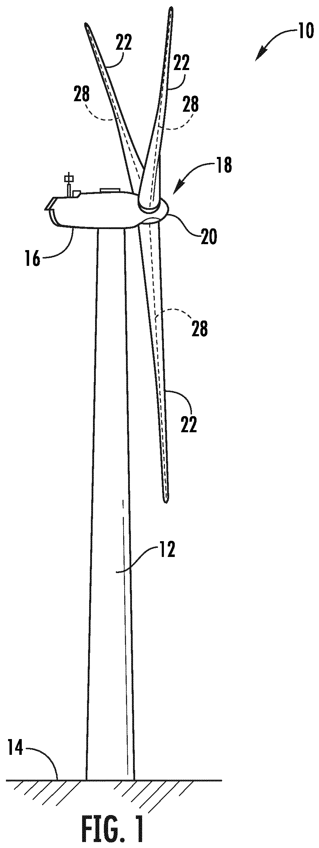

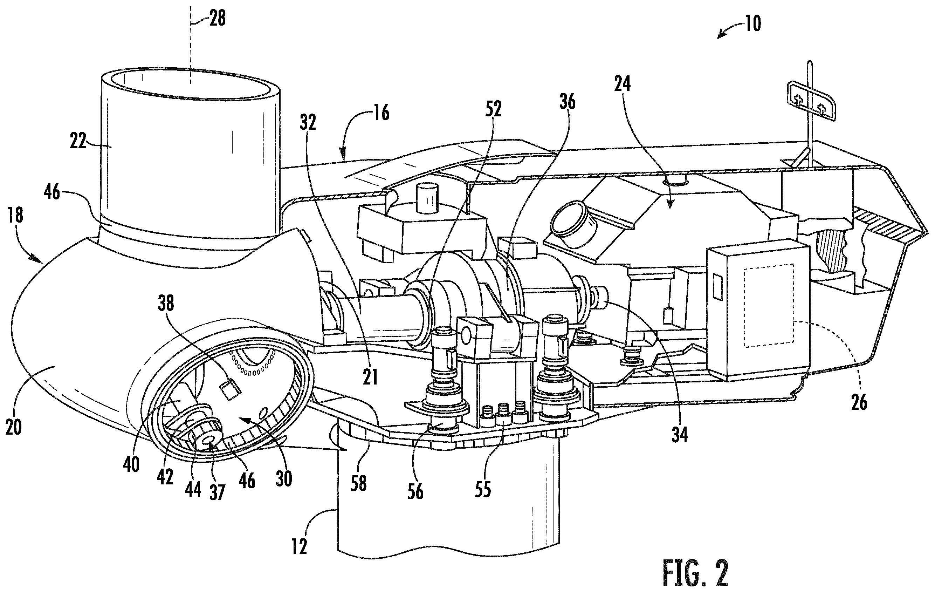

Referring now to the drawings, FIG. 1 illustrates a perspective view of a horizontal axis wind turbine 10 for placing the present disclosure in its operating environment. It should be appreciated that the wind turbine 10 may also be a vertical-axis wind turbine. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a turbine control system or controller 26 centralized within the nacelle 16. In general, the controller 26 may comprise a computer or other suitable processing unit. Thus, in several embodiments, the controller 26 may include suitable computer-readable instructions that, when implemented, configure the controller 26 to perform various different functions, such as receiving, transmitting and/or executing wind turbine control signals (e.g., pitch commands). As such, the controller 26 may generally be configured to control the various operating modes (e.g., start-up or shut-down sequences) and/or components of the wind turbine 10. For example, the controller 26 may be configured to adjust the blade pitch or pitch angle of each rotor blade 22 (i.e., an angle that determines a perspective of the blade 22 with respect to the direction of the wind) about its pitch axis 28 in order to control the rotational speed of the rotor blade 22 as well as the loads acting on the rotor blade 22. For example, the controller 26 may individually control the pitch angle of each rotor blade 22 by transmitting suitable pitch commands to a pitch system 30 (FIG. 2) of the rotor blade 22. During operation of the wind turbine 10, the controller 26 may generally transmit pitch commands to each pitch system 30 in order to alter the pitch angle of each rotor blade 22 between 0 degrees (i.e., a power position of the rotor blade 22) and 90 degrees (i.e., a feathered position of the rotor blade 22).

Referring now to FIG. 2, a simplified, internal view of one embodiment of the nacelle 16 of the wind turbine 10 shown in FIG. 1 is illustrated. As shown, a generator 24 may be disposed within the nacelle 16. In general, the generator 24 may be coupled to the rotor 18 via a drive train for producing electrical power from the rotational energy generated by the rotor 18. For example, as shown in the illustrated embodiment, the rotor 18 may include a rotor shaft 32 (low speed shaft) coupled to the hub 20 for rotation therewith. The rotor shaft 32 may, in turn, be rotatably coupled to a generator shaft 34 (high speed shaft) of the generator 24 through a gearbox 36. As is generally understood, the rotor shaft 32 may provide a low speed, high torque input to the gearbox 36 in response to rotation of the rotor blades 22 and the hub 20. The gearbox 36 may then be configured to convert the low speed, high torque input to a high speed, low torque output to drive the generator shaft 34 and, thus, the generator 24.

As shown in FIG. 2, each pitch system 30 may include a pitch adjustment mechanism 37 and a pitch controller 38 communicably coupled to the pitch adjustment mechanism 37. In general, each pitch adjustment mechanism 37 may include any suitable components and may have any suitable configuration that allows the pitch adjustment mechanism 37 to function as described herein. For example, in several embodiments, each pitch adjustment mechanism 37 may include a pitch drive motor 40 (e.g., any suitable electric motor), a pitch drive gearbox 42, and a pitch drive pinion 44. In such embodiments, the pitch drive motor 40 may be coupled to the pitch drive gearbox 42 so that the pitch drive motor 40 imparts mechanical force to the pitch drive gearbox 42. Similarly, the pitch drive gearbox 42 may be coupled to the pitch drive pinion 44 for rotation therewith. The pitch drive pinion 44 may, in turn, be in rotational engagement with a pitch bearing 46 coupled between the hub 20 and a corresponding rotor blade 22 such that rotation of the pitch drive pinion 44 causes rotation of the pitch bearing 46. Thus, in such embodiments, rotation of the pitch drive motor 40 drives the pitch drive gearbox 42 and the pitch drive pinion 44, thereby rotating the pitch bearing 46 and the rotor blade 22 about the pitch axis 28.

The operation of the pitch adjustment mechanism 37 for each rotor blade 22 may generally be controlled by the controller 26 via the individual pitch controller 38 for that rotor blade 22.

Similarly, the wind turbine 10 may include one or more yaw drive mechanisms 56 communicatively coupled to the controller 26, with each yaw drive mechanism(s) 56 being configured to change the angle of the nacelle 16 relative to the wind (e.g., by engaging a yaw bearing 58 of the wind turbine 10). The yaw system may include a yaw brake 55, such as a conventional piston/cylinder brake system, as well as a yaw lock (not depicted in FIG. 2).

Referring to FIG. 2, a braking system is operatively configured along the generator drive train and includes a brake 52 controlled by a brake controller (not depicted). Although not limited to a particular construction, the brake 52 in one embodiment may be a disc and caliper arrangement, such as a hydraulically actuated disc and caliper brake, that is sufficient to bring the rotor 18 to a full stop and hold the rotor 18 at a fault condition, for example, an overspeed fault. In certain embodiments, the brake 52 may be operatively configured on the low speed shaft 32, the high speed shaft 34, or on the generator 24. Reference may be made to U.S. Pat. No. 6,265,785 for a more detailed description of a suitable hydraulic braking system that may be used in embodiments of the present disclosure. In further embodiments, as mentioned above, the brake 52 may be any suitable device or system that applies a braking torque to the rotor at any location along the generator drive train.

FIG. 2 also depicts a rotor lock 21 that serves to prevent rotation of the drivetrain components during repair/maintenance procedures. The rotor lock 21 may be configured as an assembly with a plurality of rotor lock pins that engage a rotor lock disk. Various configurations of rotor locks are known in the industry, and any suitable lock may be utilized for purposes of the present disclosure. One example rotor lock is provided in U.S. Pat. No. 8,556,591 and is incorporated herein by reference in its entirety. Further, as shown in FIG. 2, the rotor lock 21 is a low speed shaft rotor lock in that it is configured on the low speed shaft 32. In alternate embodiments, the rotor lock 21 may be configured along the high speed shaft 34.

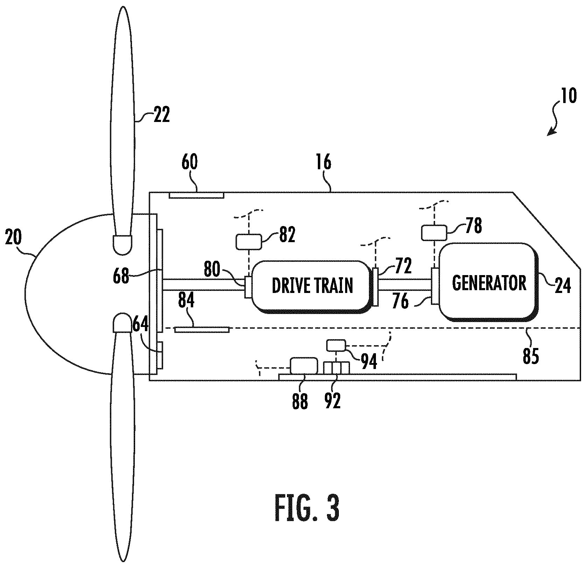

Referring now to FIG. 3, a simplified, schematic diagram of the wind turbine 10 configured to practice the advantageous methods of the present disclosure is illustrated. More specifically, as shown, the nacelle 16 of the wind turbine 10 may include a roof hatch 60 provided as a means for personnel to gain access to the topside of the nacelle 16 for various maintenance/repair procedures. Further, as shown, the wind turbine 10 may include a hub access hatch 64 for providing access for personnel to enter into the hub 20 for performing any manner of maintenance/repair procedures. The location of the hub access hatch 64 can vary depending on the design and configuration of the particular wind turbine 10, and is depicted below a bedplate 85 or other frame structure within the nacelle 16 for illustrative purposes only. Moreover, a yaw area access hatch 84 provides access for personnel to enter into the area within the nacelle 16 below the bedplate 85 for performing any manner of maintenance/repair procedures on the yaw components, such as the yaw drive mechanisms 56, yaw brake 92, yaw lock 88, and so forth.

It should be understood that the wind turbine 10 may include any conventional configuration of a rotor lock, rotor brake, yaw lock, and/or yaw brake. For example, FIG. 3 depicts a low speed shaft rotor lock 68 and a high speed shaft rotor lock 72. It is understood that the wind turbine 10 may be configured with either or both of the rotor locks 68, 72. Furthermore, as shown, FIG. 3 depicts a low speed shaft rotor brake 80 and associated brake controller 82, as well as a high speed shaft rotor brake 76 and associated brake controller 78. It is understood that the wind turbine 10 may be configured with either or both of the rotor brakes 80, 76 and associated controllers 82, 78. FIG. 3 further depicts a yaw lock 88, as well as a yaw brake 92 and associated brake controller 94.

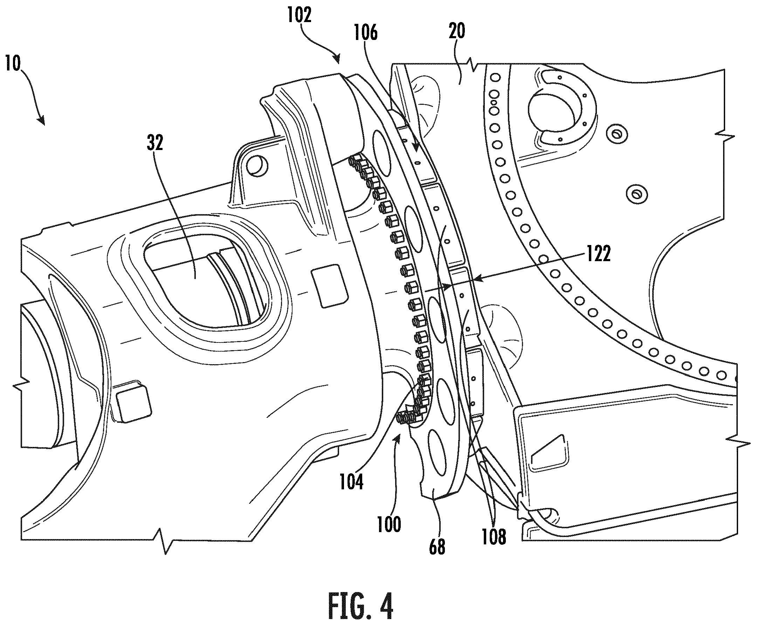

Referring now to FIGS. 4-15, various embodiments of components of bolted-joint connection 100 at an interface 102 between the hub 20 and the rotor shaft 32 according to the present disclosure are illustrated. Though the illustrated embodiments depict the bolted-joint connection 100 at the interface 102 between the hub 20 and the rotor shaft 32, it should be further understood that the bolted-joint connection may be located at an interface between the gearbox 36 and the generator shaft 34.

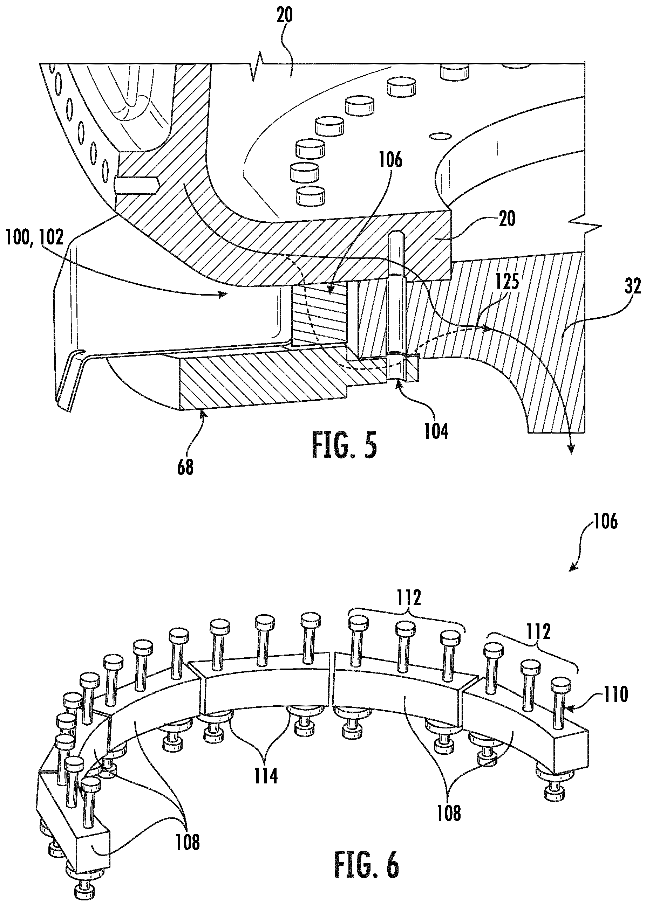

In particular, FIG. 4 illustrates a detailed, perspective view of one embodiment of the bolted-joint connection 100 according to the present disclosure is illustrated, whereas FIGS. 5-10 illustrate various components of differing embodiments of the bolted-joint connection 100 of FIG. 4. As shown in FIG. 4, the interface 102 includes the rotor lock 68 arranged with the rotor shaft 32 for locking the rotor shaft 32 in a locked position. Further, as shown in FIGS. 4, 5, and 7, the bolted-joint connection 100 includes a first plurality of fasteners 104 extending through the hub 20, the rotor shaft 32, and the rotor lock 68. Thus, as shown in FIG, 5, a load transfer path from the hub 20 to the rotor shaft 32 travels through each of the hub 20, the rotor shaft 32, and the rotor lock 68 so as to increase a load capacity of the interface.

As shown in FIGS. 4-10, the interface 102 also includes a hub stiffener 106. For example, as shown in FIG. 4, the hub stiffener 106 may be positioned on a rotor side (i.e., on the same side as the rotor 18) of the rotor lock 68. In alternative embodiments, the hub stiffener 106 may be positioned on a generator side (i.e., on the same side as the generator 24) of the rotor lock 68.

Furthermore, as shown in FIGS. 4, 6, 8, and 9, in certain embodiments, the hub stiffener 106 may include a plurality of stiffener segments 108 arranged circumferentially around the rotor lock 68. More particularly, as shown in FIGS. 6, 8, and 9, each of the stiffener segments 108 receives a subset 112 of a second plurality of fasteners 110 therethrough. In such embodiments, as shown, the second plurality of fasteners 110 may be arranged concentric with the first plurality of fasteners 104.

FIGS. 5-8 illustrate multiple embodiments of the bolted-joint connection 100 and the corresponding hub stiffener 106. In such embodiments, as shown, the bolted-joint connection 100 includes two rings of fasteners (i.e., the first plurality of fasteners 104 and the second plurality of fasteners 110). For example, as shown in FIGS. 5 and 6, each of the stiffener segments 108 receives three of the second plurality of fasteners 110. It should be understood that each stiffener segment 108 may include more than three or less than three of the second plurality of fasteners 110.

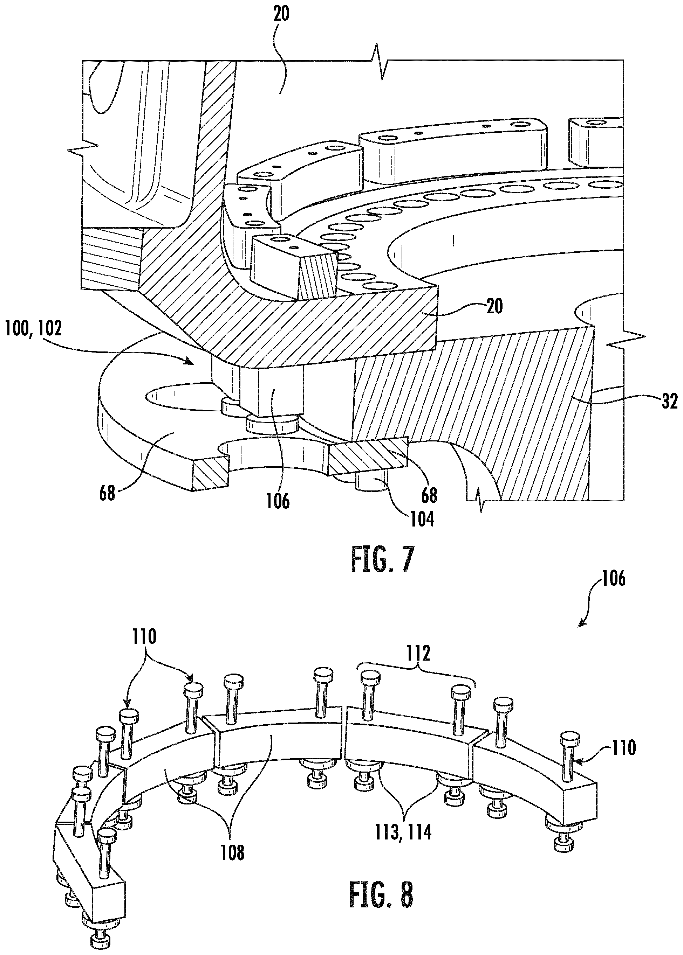

For example, in an embodiment, as shown in FIGS. 7 and 8, each of the stiffener segments 108 may receive two of the second plurality of fasteners 110 (i.e., the middle fastener is eliminated). Accordingly, the second plurality of fasteners 110 are configured to secure the plurality of stiffener segments 108 to the hub 20 between the rotor lock 68 and the hub 20, e.g., radially outward of the first plurality of fasteners 104.

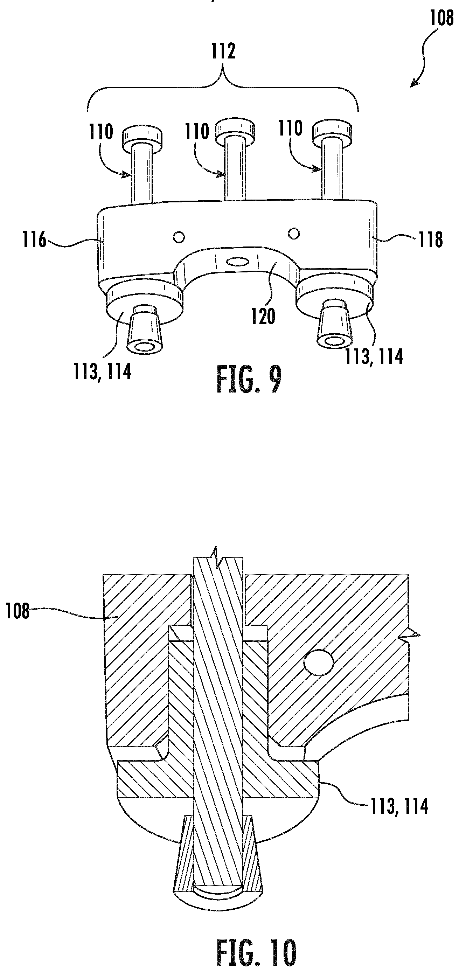

In additional embodiments, as shown in FIG. 9, one or more of the plurality of stiffener segments 108 may include a scalloped portion 120 for reducing weight thereof and/or to enable packaging of the features and/or components required in the assembly process.

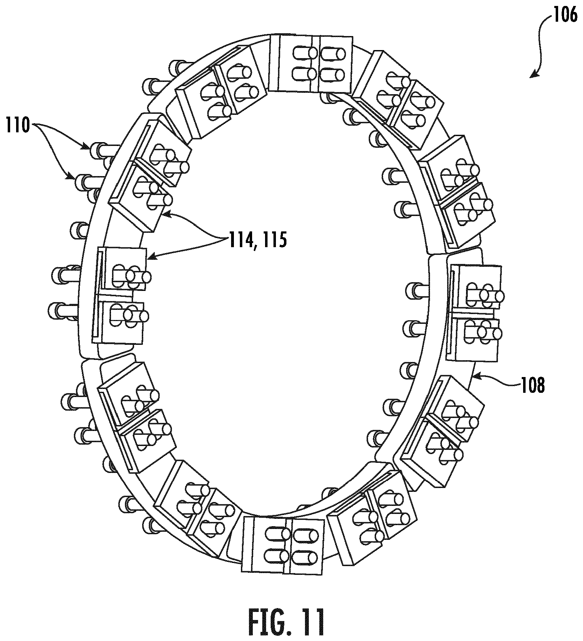

In further embodiments, as shown in FIGS. 6, 8, 9 and 10, in an embodiment, each of the stiffener segments 108 may further include one or more jacking components 114. In such embodiments, as shown particularly in FIG. 9, the jacking components 114 may be jacking fasteners 113 positioned at opposing ends 116, 118 of the each of the stiffener segments 108. Thus, in such embodiments, the jacking fasteners 113 can be engaged to adjust a height of the hub stiffener 106. In alternative embodiments, as shown in FIGS. 11-13, the jacking components 114 may be jacking wedges 115 positioned in opposing directions adjacent to the stiffener segments 108. Accordingly, the jacking components 114 are configured to adjust a height of the hub stiffener 106, e.g., to match a gap 122 between the hub 20 and the rotor lock 68.

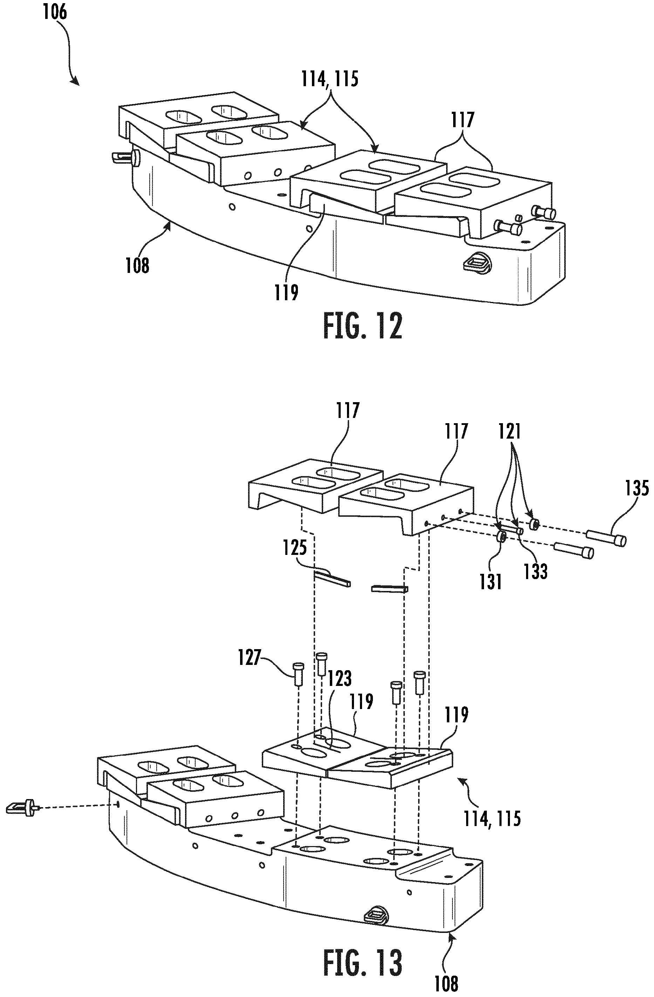

More specifically, as shown in FIGS. 12 and 13, each of the jacking wedges 115 may include a wedge cover 117 arranged with a wedge shim 119. Further, as shown, the wedge shim(s) 119 may be secured to the stiffener segments 108 via one or more fasteners 127. In addition, as shown, the wedge cover(s) 117 may be temporarily secured to the respective wedge shim(s) 119 via one or more fasteners 121 (such via nuts 131 and bolts 133), e.g., during lifting and/or installation. Thus, as shown, jacking wedges 115 may further include one or more jack screws 135 configured to expand the wedge pairs into contact with the rotor lock 68 so as to match the gap 122 between the hub 20 and the rotor lock 68. Moreover, as shown, the wedge shim(s) 119 may include a notch 123 for receiving a key 125 that maintains alignment of the wedge cover(s) 117 with the respective wedge shim(s) 119.

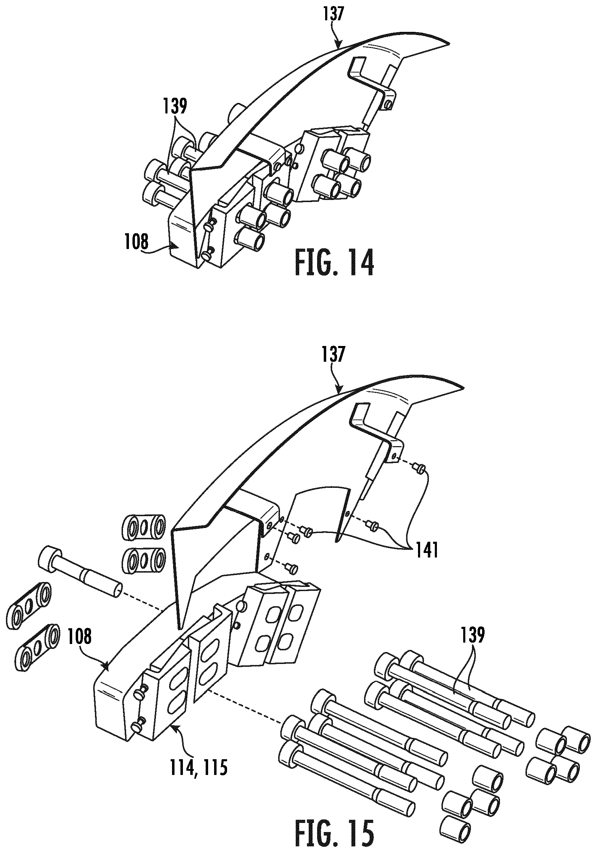

In another embodiment, as shown in FIGS. 14 and 15, the hub stiffener 106 may also optionally include a rain cover 137. More specifically, as shown, the rain cover 137 may be secured to the hub stiffener 106 and the rotor lock dick 68 via one or more first fasteners 141. Further, as shown, one or more second fasteners 139 may be used to define the new load path being created by the bolted-joint connection 100.

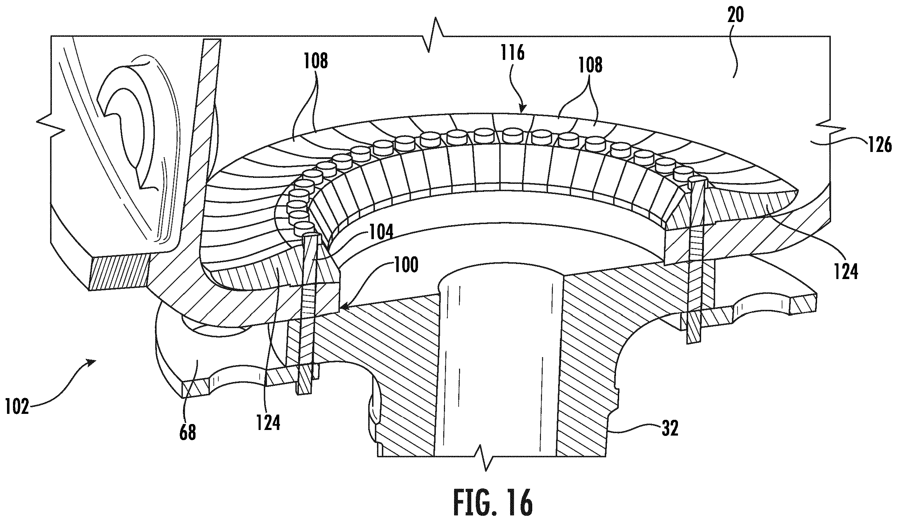

In alternative embodiments, as shown in FIG. 16, each of the plurality of stiffener segments 108 may be positioned within the hub 20. In such embodiments, the bolted-joint connection 100 may only include a single ring of fasteners (i.e., the first plurality of fasteners 104) and the second plurality of fasteners 110 may be omitted. Thus, in such embodiments, each of the plurality of stiffener segments 108 may receive one or more of the first plurality of fasteners 104 therethrough. Moreover, as shown, each of the stiffener segments 108 may have a generally tapered cross-section 124 that tapers towards an inner surface of the hub 20. Accordingly, as shown, each of the stiffener segments 108 are placed adjacent to each other to form the hub stiffener 106 having a generally continuous surface. Such an arrangement provides improved stiffness to the bolted-joint connection 100.

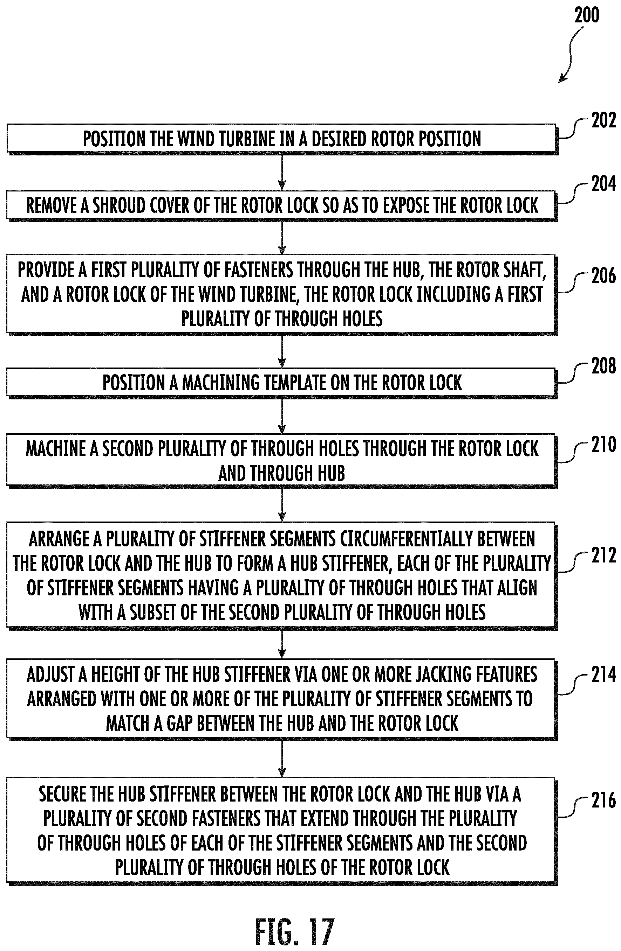

Referring now to FIG. 17, a flow diagram of one embodiment of a method 200 of increasing a load capacity of an interface between a hub and a rotor shaft of a wind turbine is illustrated. In general, the method 200 will be described herein with reference to the interface 102 between the hub 20 and the rotor shaft 32 of the wind turbine 10 described above with reference to FIGS. 1-16. However, it should be appreciated by those of ordinary skill in the art that the disclosed method 200 may generally be utilized with any wind turbine having any suitable configuration. In addition, although FIG. 17 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

In an embodiment, as shown at (202), the method 200 may include positioning the wind turbine 10 in a desired rotor position, such as in a rabbit-eared position and locking the rotor 18 in the desired position. As shown at (204), the method 200 includes optionally include removing a shroud of cover of the rotor lock 68 so as to expose the rotor lock 68. Similarly, if needed, a rain cover of the wind turbine 10 may also be removed to provide access to the rotor lock 68. As shown at (206), the method 200 includes providing a first plurality of fasteners 104 through the hub 20, the rotor shaft 32, and the rotor lock 68 of the wind turbine 10. Further, as generally shown in the figures, the rotor lock 68 includes a first plurality of through holes.

Thus, as shown at (208), the method 200 may further include positioning a machining template on the rotor lock 68. Further, as shown at (210), the method 200 includes machining a second plurality of through holes through the rotor lock 68. For example, in an embodiment, the second plurality of through holes may be machined using any suitable cutting tool, such as a drill. Moreover, as part of the machining process, the method 200 may also include grinding, painting, coating, or similar. For example, in an embodiment, one or more areas within the hub 20 may be grinded such that the various fasteners described herein can lay flat.

In one embodiment, the method 200 may include machining the second plurality of through holes through the rotor lock 68 from outside of the hub 20. Alternatively, the method 200 may include machining the second plurality of through holes through the rotor lock 68 from within the hub 20.

Referring still FIG. 17, as shown at (212), the method 200 includes arranging a plurality of stiffener segments 108 circumferentially between the rotor lock 68 and the hub 20 to form the hub stiffener 106. Further, as described herein, each of the stiffener segments 108 have a plurality of through holes formed therein that align with a subset of the second plurality of through holes. In addition, if needed, as shown at (214), the method 200 may include adjusting a height of the hub stiffener 106 via one or more jacking components 114 arranged with one or more of the stiffener segments 108 to match a gap 122 between the hub 20 and the rotor lock 68. Once the gap 122 is closed using the hub stiffener 106, as shown at (216), the method 200 includes securing the hub stiffener 106 between the rotor lock 68 and the hub 20 via a plurality of second fasteners 110 that extend through the plurality of through holes of each of the stiffener segments 108 and the second plurality of through holes of the rotor lock 68.

In another embodiment, the method 200 may include re-installing the rain cover or installing a new segmented rain cover at the interface 102.

Various aspects and embodiments of the present invention are summarized and defined by the following clauses:
According to an example, a wind turbine is described, comprising:
a nacelle;
a generator housed with the nacelle;
a rotor comprising a rotatable hub with at least one rotor blade mounted thereto;
at least one shaft rotatably coupled to the hub for driving the generator; and
a rotor lock arranged with the at least one shaft for locking the at least one shaft in a locked position; and
a bolted-joint connection at an interface between the hub and the at least one shaft comprising a first plurality of fasteners extending through the hub, the at least one shaft, and the rotor lock,
wherein a load transfer path from the hub to the at least one shaft travels through each of the hub, the at least one shaft, and the rotor lock so as to increase a load capacity of the interface.

According to some embodiments, which may be combined with other embodiments or examples described herein, the wind turbine as described herein, further comprises a gearbox, wherein the at least one shaft comprises a rotor shaft rotatably coupled to the rotatable hub for driving the gearbox and a generator shaft rotatably coupled to the gearbox for driving the generator. In some embodiments, which may be combined with other embodiments or examples described herein , the rotor lock of the wind turbine as described herein is one of a rotor shaft rotor lock or a generator shaft rotor lock.

According to some embodiments, which may be combined with other embodiments or examples described herein, the interface of the wind turbine as described herein further comprises a hub stiffener.

According to some embodiments, which may be combined with other embodiments or examples described herein, wherein the hub stiffener of the wind turbine as described herein is positioned on a rotor side of the rotor lock.

According to some embodiments, which may be combined with other embodiments or examples described herein, the hub stiffener of the wind turbine as described herein is positioned on a generator side of the rotor lock.

In some embodiments, which may be combined with other embodiments or examples described herein, the hub stiffener of the wind turbine as described herein comprises a plurality of stiffener segments arranged circumferentially around the rotor lock.

According to some embodiments, which may be combined with other embodiments or examples described herein, each of the plurality of stiffener segments of the wind turbine as described herein receives one or more of the first plurality of fasteners therethrough.

According to some embodiments, which may be combined with other embodiments or examples described herein, each of the plurality of stiffener segments of the wind turbine as described herein is positioned within the rotatable hub.

In some embodiments, which may be combined with other embodiments or examples described herein, each of the plurality of stiffener segments receives a subset of a second plurality of fasteners therethrough such that the second plurality of fasteners secure the plurality of stiffener segments to the rotatable hub between the rotor lock and the hub, wherein the second plurality of fasteners is arranged concentric with the first plurality of fasteners.

In some embodiments, which may be combined with other embodiments or examples described herein, the one or more of the subset of the second plurality of fasteners received through each of the plurality of stiffener segments comprises jacking components.

According to some embodiments, which may be combined with other embodiments or examples described herein, the jacking components are positioned at opposing ends of the each of the plurality of stiffener segments.

According to some embodiments, which may be combined with other embodiments or examples described herein, the one or more of the plurality of stiffener segments comprises a scalloped portion for reducing weight thereof.

In an embodiment described herein, a method of increasing a load capacity of an interface between a hub and a rotor shaft of a wind turbine is described, the method comprising:
providing a first plurality of fasteners through the hub, the rotor shaft, and a rotor lock of the wind turbine, the rotor lock comprising a first plurality of through holes;
machining a second plurality of through holes through the rotor lock and through the hub;
arranging a plurality of stiffener segments circumferentially between the rotor lock and the hub to form a hub stiffener, each of the plurality of stiffener segments comprising a plurality of through holes that align with a subset of the second plurality of through holes; and
securing the hub stiffener between the rotor lock and the hub via a plurality of second fasteners that extend through the plurality of through holes of each of the stiffener segments and the second plurality of through holes of the rotor lock.

According to some embodiments, which may be combined with other embodiments or examples described herein, the method as described in embodiments herein further comprises removing a shroud of the rotor lock before machining the second plurality of through holes through the rotor lock.

In some embodiments, which may be combined with other embodiments or examples described herein, the method according to embodiments described herein further comprises adjusting a height of the hub stiffener via one or more jacking components arranged with one or more of the plurality of stiffener segments to match a gap between the hub and the rotor lock.

According to some embodiments, which may be combined with other embodiments or examples described herein, the method of embodiments described herein further comprises installing a segmented rain cover at the interface.

According to some embodiments, which may be combined with other embodiments or examples described herein, the method according to embodiments described herein further comprises machining the second plurality of through holes through the rotor lock from outside of the hub.

In some embodiments, which may be combined with other embodiments or examples described herein, the method as described in embodiments herein further comprises machining the second plurality of through holes through the rotor lock from within the hub.

In some embodiments, which may be combined with other embodiments or examples described herein, the second plurality of fasteners is arranged concentric with the first plurality of fasteners.

This written description uses examples to disclose the present disclosure, including the best mode, and also to enable any person skilled in the art to practice the present disclosure, including making and using any devices or systems and performing any incorporated methods. The patentable scope of the present disclosure is defined by the claims, and may include other examples that occur to those skilled in the art. Such other examples are intended to be within the scope of the claims if they include structural elements that do not differ from the literal language of the claims.

## Claims

1. A wind turbine (10), comprising:
a nacelle (16);
a generator (24) housed with the nacelle (16);
a rotor (18) comprising a rotatable hub (20) with at least one rotor blade (22) mounted thereto;
at least one shaft (32) rotatably coupled to the hub (20) for driving the generator (24); and **characterized in that** the wind turbine further comprises:
a rotor lock (68) arranged with the at least one shaft (32) for locking the at least one shaft (32) in a locked position; and
a bolted-joint connection (100) at an interface (102) between the hub (20) and the at least one shaft (32) comprising a first plurality of fasteners (104) extending through the hub (20), the at least one shaft (32), and the rotor lock (68),
wherein a load transfer path from the hub (20) to the at least one shaft (32) travels through each of the hub (20), the at least one shaft (32), and the rotor lock (68) so as to increase a load capacity of the interface (102); and
wherein the interface (102) further comprises a hub stiffener (106).

2. The wind turbine of claim 1, further comprising a gearbox (36), wherein the at least one shaft (32) comprises a rotor shaft rotatably coupled to the rotatable hub (20) for driving the gearbox and a generator shaft (34) rotatably coupled to the gearbox (36) for driving the generator (24).

3. The wind turbine of any one of claims 1-2, wherein the rotor lock (68) is one of a rotor shaft rotor lock or a generator shaft rotor lock.

4. The wind turbine of any one of claims 1-3, wherein the hub stiffener (106) is positioned on a rotor side of the rotor lock (68).

5. The wind turbine of any one of claims 1-3, wherein the hub stiffener (106) is positioned on a generator side of the rotor lock (68).

6. The wind turbine of any one of claims 1-5, wherein the hub stiffener (106) comprises a plurality of stiffener segments (108) arranged circumferentially around the rotor lock (68).

7. The wind turbine of claim 6, wherein each of the plurality of stiffener segments (108) receives one or more of the first plurality of fasteners (104) therethrough and wherein each of the plurality of stiffener segments (108) is positioned within the rotatable hub (20).

8. The wind turbine of any one of claims 6-7, wherein each of the plurality of stiffener segments (108) receives a subset of a second plurality of fasteners (110) therethrough such that the second plurality of fasteners (100) secure the plurality of stiffener segments (108) to the rotatable hub (20) between the rotor lock (68) and the hub, wherein the second plurality of fasteners (110) is arranged concentric with the first plurality of fasteners (104).

9. The wind turbine of claim 8, wherein one or more of the subset of the second plurality of fasteners (110) received through each of the plurality of stiffener segments (108) comprises jacking components (114), and wherein the jacking components (114) are positioned at opposing ends of the each of the plurality of stiffener segments (108).

10. A method of increasing a load capacity of an interface (102) between a hub (20) and a rotor shaft (32) of a wind turbine (10), the method comprising:
providing a first plurality of fasteners (104) through the hub (20), the rotor shaft (32), and a rotor lock (68) of the wind turbine (10), the rotor lock (68) comprising a first plurality of through holes;
machining a second plurality of through holes through the rotor lock (68) and through the hub (20);
arranging a plurality of stiffener segments (108) circumferentially between the rotor lock (68) and the hub (20) to form a hub stiffener (106), each of the plurality of stiffener segments (108) comprising a plurality of through holes that align with a subset of the second plurality of through holes; and
securing the hub stiffener (106) between the rotor lock (68) and the hub (20) via a plurality of second fasteners (110) that extend through the plurality of through holes of each of the stiffener segments (108) and the second plurality of through holes of the rotor lock (68).

11. The method of claim 10, further comprising removing a shroud of the rotor lock (68) before machining the second plurality of through holes through the rotor lock (68).

12. The method of any one of claims 10 - 11, further comprising adjusting a height of the hub stiffener (106) via one or more jacking components (114) arranged with one or more of the plurality of stiffener segments (108) to match a gap between the hub (20) and the rotor lock (68).

13. The method of any one of claims 10 - 12, further comprising installing a segmented rain cover at the interface (102).

14. The method of any one of claims 10 - 13, further comprising machining the second plurality of through holes through the rotor lock (68).

## Patentansprüche

1. Windkraftanlage (10), umfassend:
eine Gondel (16);
einen in der Gondel (16) untergebrachten Generator (24);
einen Rotor (18), der eine drehbare Nabe (20) umfasst, an der mindestens ein Rotorblatt (22) angebracht ist;
mindestens eine Welle (32), die drehbar mit der Nabe (20) gekoppelt ist, um den Generator (24) anzutreiben; und **dadurch gekennzeichnet, dass** die Windkraftanlage ferner umfasst:
eine Rotorsperre (68), die mit der mindestens einen Welle (32) angeordnet ist, um die mindestens eine Welle (32) in einer Sperrposition zu sperren;
und
eine Schraubverbindung (100) an einer Schnittstelle (102) zwischen der Nabe (20) und der mindestens einen Welle (32), die eine erste Vielzahl von Befestigungselementen (104) umfasst, die sich durch die Nabe (20), die mindestens eine Welle (32) und die Rotorsperre (68) erstrecken,
wobei ein Lastübertragungspfad von der Nabe (20) zu der mindestens einen Welle (32) durch die Nabe (20), die mindestens eine Welle (32) und die Rotorsperre (68) verläuft, um eine Lastkapazität der Schnittstelle (102) zu erhöhen; und
wobei die Schnittstelle (102) ferner eine Nabenversteifung (106) umfasst.

2. Windkraftanlage nach Anspruch 1, ferner umfassend ein Getriebe (36), wobei die mindestens eine Welle (32) eine drehbar mit der drehbaren Nabe (20) gekoppelte Rotorwelle zum Antreiben des Getriebes und eine drehbar mit dem Getriebe (36) gekoppelte Generatorwelle (34) zum Antreiben des Generators (24) umfasst.

3. Windkraftanlage nach einem der Ansprüche 1 bis 2, wobei die Rotorsperre (68) eine Rotorwellen-Rotorsperre oder eine Generatorwellen-Rotorsperre ist.

4. Windkraftanlage nach einem der Ansprüche 1 bis 3, wobei die Nabenversteifung (106) auf einer Rotorseite der Rotorsperre (68) positioniert ist.

5. Windkraftanlage nach einem der Ansprüche 1 bis 3, wobei die Nabenversteifung (106) auf einer Generatorseite der Rotorsperre (68) positioniert ist.

6. Windkraftanlage nach einem der Ansprüche 1 bis 5, wobei die Nabenversteifung (106) eine Vielzahl von Versteifungssegmenten (108) umfasst, die umfänglich um die Rotorsperre (68) angeordnet sind.

7. Windkraftanlage nach Anspruch 6, wobei jedes der Vielzahl von Versteifungssegmenten (108) von einem oder mehreren der ersten Vielzahl von Befestigungselementen (104) durchdrungen ist und wobei jedes der Vielzahl von Versteifungssegmenten (108) innerhalb der drehbaren Nabe (20) positioniert ist.

8. Windkraftanlage nach einem der Ansprüche 6 bis 7, wobei jedes der Vielzahl von Versteifungssegmenten (108) von einer Teilmenge einer zweiten Vielzahl von Befestigungselementen (110) durchdrungen ist, so dass die zweite Vielzahl von Befestigungselementen (100) die Vielzahl von Versteifungssegmenten (108) an der drehbaren Nabe (20) zwischen der Rotorsperre (68) und der Nabe befestigt, wobei die zweite Vielzahl von Befestigungselementen (110) konzentrisch zu der ersten Vielzahl von Befestigungselementen (104) angeordnet ist.

9. Windkraftanlage nach Anspruch 8, wobei eine oder mehrere der Teilmenge der zweiten Vielzahl von Befestigungselementen (110), die jeweils durch eines der Vielzahl von Versteifungssegmenten (108) hindurchgeführt sind, Hebekomponenten (114) umfassen, und wobei die Hebekomponenten (114) an gegenüberliegenden Enden jedes der Vielzahl von Versteifungssegmenten (108) positioniert sind.

10. Verfahren zum Erhöhen der Belastbarkeit einer Schnittstelle (102) zwischen einer Nabe (20) und einer Rotorwelle (32) einer Windkraftanlage (10), wobei das Verfahren umfasst:
Bereitstellen einer ersten Vielzahl von Befestigungselementen (104) durch die Nabe (20), die Rotorwelle (32) und eine Rotorverriegelung (68) der Windkraftanlage (10), wobei die Rotorverriegelung (68) eine erste Vielzahl von Durchgangslöchern umfasst;
Bearbeiten einer zweiten Vielzahl von Durchgangslöchern durch die Rotorverriegelung (68) und durch die Nabe (20);
Anordnen einer Vielzahl von Versteifungssegmenten (108) in Umfangsrichtung zwischen der Rotorverriegelung (68) und der Nabe (20), um eine Nabeversteifung (106) zu bilden, wobei jedes der Vielzahl von Versteifungssegmenten (108) eine Vielzahl von Durchgangslöchern umfasst, die mit einer Teilmenge der zweiten Vielzahl von Durchgangslöchern ausgerichtet sind; und
Befestigen der Nabenversteifung (106) zwischen der Rotorsperre (68) und der Nabe (20) über eine Vielzahl zweiter Befestigungselemente (110), die sich durch die Vielzahl von Durchgangslöchern jedes der Versteifungssegmente (108) und die zweite Vielzahl von Durchgangslöchern der Rotorsperre (68) erstrecken.

11. Verfahren nach Anspruch 10, ferner umfassend Entfernen einer Abdeckung der Rotorsperre (68) vor dem maschinellen Bearbeiten der zweiten Vielzahl von Durchgangslöchern durch die Rotorsperre (68).

12. Verfahren nach einem der Ansprüche 10 bis 11, das ferner das Einstellen einer Höhe der Nabenversteifung (106) über eine oder mehrere Hebekomponenten (114) umfasst, die mit einem oder mehreren der Vielzahl von Versteifungssegmenten (108) angeordnet sind, um einen Spalt zwischen der Nabe (20) und der Rotorsperre (68) auszugleichen.

13. Verfahren nach einem der Ansprüche 10 bis 12, ferner umfassend das Installieren einer segmentierten Regenabdeckung an der Schnittstelle (102).

14. Verfahren nach einem der Ansprüche 10 bis 13, ferner umfassend das maschinelle Bearbeiten der zweiten Vielzahl von Durchgangslöchern durch die Rotorsperre (68) umfasst.

## Revendications

1. Turbine éolienne (10), comprenant:
une nacelle (16);
un générateur (24) logé avec la nacelle (16);
un rotor (18) comprenant un moyeu rotatif (20) avec au moins une pale de rotor (22) montée sur celui-ci;
au moins un arbre (32) accouplé de manière rotative au moyeu (20) permettant d'entraîner le générateur (24); et **caractérisée en ce que** la turbine éolienne comprend en outre:
un verrouillage de rotor (68) agencé avec l'au moins un arbre (32) permettant de verrouiller l'au moins un arbre (32) dans une position verrouillée; et
un raccordement boulonné (100) au niveau d'une interface (102) entre le moyeu (20) et l'au moins un arbre (32) comprenant une première pluralité d'éléments de fixation (104) s'étendant à travers le moyeu (20), l'au moins un arbre (32) et le verrouillage de rotor (68),
dans laquelle un chemin de transfert de charge allant du moyeu (20) à l'au moins un arbre (32) traverse chacun parmi le moyeu (20), l'au moins un arbre (32) et le verrouillage de rotor (68) de manière à augmenter une capacité de charge de l'interface (102); et
dans laquelle l'interface (102) comprend en outre un raidisseur de moyeu (106).

2. Turbine éolienne selon la revendication 1, comprenant en outre un réducteur (36), dans laquelle l'au moins un arbre (32) comprend un arbre de rotor accouplé de manière rotative au moyeu rotatif (20) permettant d'entraîner le réducteur et un arbre de générateur (34) accouplé de manière rotative au réducteur (36) permettant d'entraîner le générateur (24).

3. Turbine éolienne selon l'une quelconque des revendications 1 à 2, dans laquelle le verrouillage de rotor (68) est l'un parmi un verrouillage de rotor d'arbre de rotor ou un verrouillage de rotor d'arbre de générateur.

4. Turbine éolienne selon l'une quelconque des revendications 1 à 3, dans laquelle le raidisseur de moyeu (106) est positionné sur un côté rotor du verrouillage de rotor (68).

5. Turbine éolienne selon l'une quelconque des revendications 1 à 3, dans laquelle le raidisseur de moyeu (106) est positionné sur un côté générateur du verrouillage de rotor (68).

6. Turbine éolienne selon l'une quelconque des revendications 1 à 5, dans laquelle le raidisseur de moyeu (106) comprend une pluralité de segments de raidisseur (108) agencés circonférentiellement autour du verrouillage de rotor (68).

7. Turbine éolienne selon la revendication 6, dans laquelle chacun parmi la pluralité de segments de raidisseur (108) reçoit un ou plusieurs parmi une première pluralité d'éléments de fixation (104) à travers ceux-ci et dans laquelle chacun parmi la pluralité de segments de raidisseur (108) est positionné au sein du moyeu rotatif (20).

8. Turbine éolienne selon l'une quelconque des revendications 6 à 7, dans laquelle chacun parmi la pluralité de segments de raidisseur (108) reçoit un sous-ensemble d'une seconde pluralité d'éléments de fixation (110) à travers ceux-ci de telle sorte que la seconde pluralité d'éléments de fixation (100) fixe la pluralité de segments de raidisseur (108) au moyeu rotatif (20) entre le verrouillage de rotor (68) et le moyeu, dans laquelle la seconde pluralité d'éléments de fixation (110) est agencée concentrique par rapport à la première pluralité d'éléments de fixation (104).

9. Turbine éolienne selon la revendication 8, dans laquelle un ou plusieurs parmi le sous-ensemble de la seconde pluralité d'éléments de fixation (110) reçus à travers chacun parmi la pluralité de segments de raidisseur (108) comprennent des composants de levage (114), et dans laquelle les composants de levage (114) sont positionnés au niveau d'extrémités opposées de chacun parmi la pluralité de segments de raidisseur (108).

10. Procédé d'augmentation d'une capacité de charge d'une interface (102) entre un moyeu (20) et un arbre de rotor (32) d'une turbine éolienne (10), le procédé comprenant:
la fourniture d'une première pluralité d'éléments de fixation (104) à travers le moyeu (20), l'arbre de rotor (32) et un verrouillage de rotor (68) de la turbine éolienne (10), le verrouillage de rotor (68) comprenant une première pluralité de trous traversants;
l'usinage d'une seconde pluralité de trous traversants à travers le verrouillage de rotor (68) et à travers le moyeu (20);
l'agencement d'une pluralité de segments de raidisseur (108) circonférentiellement entre le verrouillage de rotor (68) et le moyeu (20) pour former un raidisseur de moyeu (106), chacun parmi la pluralité de segments de raidisseur (108) comprenant une pluralité de trous traversants qui s'alignent avec un sous-ensemble de la seconde pluralité de trous traversants; et
la fixation du raidisseur de moyeu (106) entre le verrouillage de rotor (68) et le moyeu (20) par l'intermédiaire d'une pluralité de seconds éléments de fixation (110) qui s'étendent à travers la pluralité de trous traversants de chacun des segments de raidisseur (108) et la seconde pluralité de trous traversants du verrouillage de rotor (68).

11. Procédé selon la revendication 10, comprenant en outre le retrait d'un carénage du verrouillage de rotor (68) avant usinage de la seconde pluralité de trous traversants à travers le verrouillage de rotor (68).

12. Procédé selon l'une quelconque des revendications 10 à 11, comprenant en outre l'ajustement d'une hauteur du raidisseur de moyeu (106) par l'intermédiaire d'un ou plusieurs composants de levage (114) agencés avec un ou plusieurs parmi la pluralité de segments de raidisseur (108) pour concorder avec un espace entre le moyeu (20) et le verrouillage de rotor (68).

13. Procédé selon l'une quelconque des revendications 10 à 12, comprenant en outre l'installation d'un couvercle anti-pluie segmenté au niveau de l'interface (102).

14. Procédé selon l'une quelconque des revendications 10 à 13, comprenant en outre l'usinage de la seconde pluralité de trous traversants à travers le verrouillage de rotor (68).
